# EUROPÄISCHE PATENTSCHRIFT

(11) **EP 3 271 411 B1**
(45) Veröffentlichungstag und Bekanntmachung des Hinweises auf die Patenterteilung: **10.01.2024**
(21) Anmeldenummer: 16709407.7
(22) Anmeldetag: 10.03.2016
(51) Int. Cl.: C08G 18/62, C08G 18/73, C08G 18/79, C08G 18/02, C08G 18/18, C08G 18/20, C09D 175/04, C08G 18/28, C08G 18/80

(54) **SILANGRUPPEN ENTHALTENDE POLYISOCYANATE AUF BASIS VON 1,5-DIISOCYANATOPENTAN**
POLYISOCYANATES CONTAINING SILANE GROUPS BASED ON 1,5-DIISOCYANATOPENTANE
POLYISOCYANATES CONTENANT DES GROUPES DE SILANES À BASE DE 1,5-DIISOCYANATOPENTANE

(30) Priorität: 17.03.2015 EP 15159507
(43) Veröffentlichungstag der Anmeldung: 24.01.2018
(73) Patentinhaber: Covestro Intellectual Property GmbH & Co. KG, 51373 Leverkusen (DE)
(72) Erfinder: LAAS, Hans-Josef, 51519 Odenthal (DE); EGGERT, Christoph, 50733 Köln (DE); HECKING, Andreas, 40764 Langenfeld (DE); YUVA, Nusret, 51399 Burscheid (DE); BEHNKEN, Gesa, 50676 Köln (DE)
(74) Vertreter: Levpat
(86) Internationale Anmeldenummer: PCT/EP2016/055133
(87) Internationale Veröffentlichungsnummer: WO 2016/146474

(56) Entgegenhaltungen:
- EP-A1- 2 684 867
- WO-A1-2012/065942
- WO-A1-2014/086530

## Beschreibung

Die Erfindung betrifft Silangruppen enthaltende Polyisocyanatgemische auf Basis von 1,5-Diisocyanatopentan, ein Verfahren zu ihrer Herstellung und ihre Verwendung als Ausgangskomponente bei der Herstellung von Polyurethankunststoffen, insbesondere als Vernetzerkomponente in Polyurethanlacken und -beschichtungen.

Alkoxysilangruppen enthaltende Polyisocyanatgemische sind seit längerer Zeit bekannt. Derartige Produkte, die neben der Isocyanatgruppe eine zweite reaktive, d. h. zur Vernetzung fähige Struktur enthalten, wurden in der Vergangenheit in unterschiedlichen Polyurethansystemen und -anwendungen zur Erzielung spezieller Eigenschaften, beispielsweise zur Verbesserung der Haftung, Chemikalien- oder Kratzbeständigkeit von Beschichtungen, eingesetzt.

Beispielsweise beschreibt die WO 03/054049 isocyanatfunktionelle Silane, hergestellt aus monomerenarmen aliphatischen oder cycloaliphatischen Polyisocyanaten und sekundären Aminopropyltrimethoxysilanen, als Haftvermittler für Polyurethan-Schmelzklebstoffe.

Auch nach der Lehre der JP-A 2005-015644 lässt sich durch Einsatz von mit N-substituierten, d. h. sekundären Aminopropylalkoxysilanen modifizierten Polyisocyanaten oder Isocyanatprepolymeren die Haftung von Kleb- und Dichtstoffen verbessern.

Die EP-B 0 994 139 beansprucht Umsetzungsprodukte von aliphatischen bzw. cycloaliphatischen Polyisocyanaten mit unterschüssigen Mengen alkoxysilanfunktioneller Asparaginsäureester, wie sie in der EP 0 596 360 als Reaktionspartner für isocyanatfunktionelle Verbindungen beschrieben werden, und gegebenenfalls Polyethylenoxidpolyetheralkoholen als Bindemittel für einkomponentige feuchtigkeitsvernetzende Beschichtungen, Kleb- oder Dichtstoffe mit beschleunigter Aushärtung.

Umsetzungsprodukte aliphatischer bzw. cycloaliphatischer Polyisocyanate mit unterschüssigen Mengen alkoxysilanfunktioneller Asparaginsäureester oder sekundärer Aminoalkylsilane werden auch in der WO 02/058569 als Vernetzerkomponenten für Zweikomponenten-Polyurethan-Haftprimer beschrieben.

Die EP-B 0 872 499 beschreibt wässrige zwei-komponentige Polyurethanlacke, die als Vernetzerkomponente Isocyanat- und Alkoxysilylgruppen aufweisende Verbindungen enthalten. Der Einsatz dieser speziellen Polyisocyanate führt zu Beschichtungen mit verbesserter Wasserfestigkeit bei gleichzeitig hohem Glanz.

Hydrophil modifizierte und daher leichter emulgierbare, Alkoxysilangruppen enthaltende Polyisocyanate wurden ebenfalls bereits als Vernetzerkomponenten für wässrige 2K-Lack- und Klebstoffdispersionen genannt (z. B. EP-A 0 949 284).

Eine besondere Bedeutung haben Silangruppen enthaltende Polyisocyanate für die Herstellung kratzfester Beschichtungen.

Zur Verbesserung der Kratzbeständigkeit von lösemittelhaltigen wärmehärtenden 2K-PUR-Automobil-Klar- bzw. Decklacken wurden Umsetzungsprodukte von aliphatischen und/oder cycloaliphatischen Polyisocyanaten mit N,N-Bis-(trialkoxysilylpropyl)-aminen als Vernetzerkomponente vorgeschlagen (EP-A 1 273 640).

Eine Reihe weiterer Veröffentlichungen beschreibt ebenfalls Beschichtungsmittel zur Herstellung wetterstabiler, kratzfester Klarlackschichten für die OEM-Serienlackierung und Automobilreparaturlackierung, bei den als Vernetzerkomponenten Umsetzungsprodukte aliphatischer und/oder cycloaliphatischer Polyisocyanate mit molar unterschüssigen Mengen gegenüber Isocyanatgruppen reaktiver Alkoxysilane zum Einsatz kommen. Als geeignete reaktive Alkoxysilane werden dabei insbesondere spezielle Gemische von Bis(alkoxysilylalkyl)aminen mit N-Alkyl-mono(alkoxysilylalkyl)aminen (z. B. WO 2008/074489, WO 2008/074490, WO 2010/149236 und WO 2014/086530), Mercaptoalkylalkoxysilane und/oder sekundären Alkoxysilylalkylaminen (z. B. WO 2009/156148) genannt.

Der weitaus größte Teil der bekannten und im Markt kommerziell verfügbaren, Silangruppen enthaltenden Polyisocyanate leitet sich von Polyisocyanaten, insbesondere Polyisocyanuratpolyisocyanaten, des 1,6-Diisocyanatohexans (Hexamethylendiisocyanat, HDI) ab.

Alkoxysilan-modifizierte HDI-Polyisocyanate sind mit einer Vielzahl unterschiedlicher Lackbindemittel gut verträglich und führen zu Beschichtungen von hohem Glanz und hoher Transparenz, die sich insbesondere aufgrund ihrer Selbstheilungseigenschaften durch eine sehr gute Beständigkeit gegenüber Verkratzung auszeichnen. Unter "Reflow"-Bedingungen, d. h. kurzzeitigem Erwärmen auf Temperaturen oberhalb der Glastemperatur (Tg), können einmal zugefügte feine Kratzer bei solchen Lacken soweit ausheilen, dass der Glanz wieder in die Nähe des Ausgangsglanzes des unverkratzten Lackfilms gelangt.

Für eine Reihe von Anwendungen, beispielsweise für die Automobilreparaturlackierung und insbesondere die OEM-Serienlackierung, besteht im Markt eine stetige Nachfrage nach Beschichtungsmitteln mit weiter verbesserter Kratzbeständigkeit. Von besonderem Interesse sind dabei 2K-PUR-Lacke, die eine "echte" Kratzbeständigkeit aufweisen, d. h. solche, bei denen eine Verkratzung per se nur zu einem sehr geringen Glanzverlust führt und man bezüglich Erhalt der optischen Qualität nicht auf einen Reflow-Effekt angewiesen ist.

Aufgabe der vorliegenden Erfindung war es daher, neue Silangruppen enthaltende Polyisocyanate zur Verfügung zu stellen, die sich für sämtliche Anwendungsgebiete Silangruppen enthaltender Polyisocyanate eignen und insbesondere in Kombination mit üblichen Lackbindemitteln Beschichtungen ergeben, die eine deutlich höhere Kratzfestigkeit zeigen als solche, die unter Verwendung der bekannten Silangruppen enthaltenden HDI-Polyisocyanate des Standes der Technik hergestellt wurden, und diesen gleichzeitig bezüglich sonstiger Lackeigenschaften in nichts nachstehen.

Diese Aufgabe konnte mit der Bereitstellung der nachfolgend näher beschriebenen erfindungsgemäßen Silangruppen enthaltenden Polyisocyanate bzw. Polyisocyanatgemische auf Basis von 1,5-Diisocyanatopentan (PDI) gelöst werden.

Silangruppen enthaltende PDI-Derivate, die als Vernetzungmittel zur Herstellung kratzfester Polyurethanbeschichtungen dienen könnten, waren bisher nicht bekannt.

Gegenstand der vorliegenden Erfindung sind daher modifizierte Polyisocyanate, erhältlich durch Umsetzung von wenigstens einem Polyisocyanat A) auf Basis von 1,5-Diisocyanatopentan mit wenigstens einer gegenüber Isocyanatgruppen reaktiven Silanverbindung B).

Gegenstand der Erfindung ist auch ein Verfahren zur Herstellung der erfindungsgemäßen modifizierte Polyisocyanate, dadurch gekennzeichnet, dass wenigstens
A) ein Polyisocyanat auf Basis von 1,5-Diisocyanatopentan mit
B) wenigstens einer gegenüber Isocyanatgruppen reaktiven Silanverbindung um gesetzt wird.

Weiterhin ist Gegenstand der Erfindung die Verwendung der modifizierten Polyisocyanate oder von Gemischen enthaltend die modifizierten Polyisocyanate als Ausgangskomponenten zur Herstellung von Polyurethankunststoffen, sowie Beschichtungsmittel enthaltend die modifizierten Polyisocyanate oder Gemische enthaltend die modifizierten Polyisocyanate.

Die Herstellung der erfindungsgemäßen hydrophil-modifizierten Polyisocyanatgemische auf Basis von 1,5-Diisocyanatopentan erfolgt unter Verwendung von Ausgangspolyisocyanaten A) sowie mindestens ein gegenüber Isocyanatgruppen reaktiven Silanverbindung B).

Polyisocyanate A) zur Herstellung der erfindungsgemäßen Silangruppen enthaltenden Polyisocyanatgemische sind beliebige durch Modifizierung von 1,5-Diisocyanatopentan erhältliche oligomere Polyisocyanate mit Uretdion-, Isocyanurat-, Allophanat-, Biuret-, Iminooxadiazindion- und/oder Oxadiazintrionstruktur oder beliebige Gemische solcher PDI-Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 und EP-A 0 798 299 beispielhaft beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI. Konkrete Beispiele für derartige oligomere PDI-Polyisocyanate finden sich beispielsweise in EP-A 2 418 198, EP-A 2 684 JP 2010-121011, 867, JP 2010-254764, JP 2010-265364, JP 2011-201863, JP 2012-152202 oder der JP 2013-060542.

Das zur Herstellung der Polyisocyanate A) eingesetzte 1,5-Diisocyanatopentan ist auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

Gegebenenfalls können bei der Herstellung der Polyisocyanate A) neben 1,5-Diisocyanatopentan weitere Diisocyanate mit aliphatisch, cycloaliphatisch, araliphatisch und/oder aromatisch gebundenen Isocyanatgruppen mitverwendet werden. Hierbei handelt es sich insbesondere um solche des Molekulargewichtsbereichs 140 bis 400, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyana-todicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate. Diese bei der Herstellung der Ausgangspolyisocyanate A) gegebenenfalls mitzuverwendenden Diisocyanate kommen, falls überhaupt, in Mengen von bis zu 80 Gew.-%, vorzugsweise bis zu 50 Gew.-%, besonders bevorzugt bis zu 20 Gew.-%, bezogen auf die Gesamtmenge an eingesetzten Diisocyanaten zum Einsatz.

Ganz besonders bevorzugte Ausgangsverbindungen A) sind Isocyanuratstrukturen enthaltende Polyisocyanate, die unter Verwendung von PDI als alleinigem Diisocyanat hergestellt wurden und eine mittlere NCO-Funktionalität von 2,3 bis 5,0, vorzugsweise von 2,5 bis 4,5, einen Gehalt an Isocyanatgruppen von 11,0 bis 26,0 Gew.-%, vorzugsweise von 13,0 bis 25,0 Gew.-% und einen Gehalt an monomerem PDI von weniger als 1,0 Gew.-%, vorzugsweise weniger als 0,5 Gew.-% aufweisen.

Das erfindungsgemäße Polyisocyanat A) ist ein oligomeres, aus mindestens zwei Molekülen 1,5-Diisocyanatopentan bestehendes Polyisocyanat mit Uretdion-, Isocyanurat-, Allophanat-, Biuret-, Iminooxadiazindion- und/oder Oxadiazintrionstruktur oder ein beliebiges Gemisch solcher Polyisocyanate.

In einer weiter vorteilhaften Ausführungsform der Erfindung handelt es sich bei dem Polyisocyanat A) um wenigstens ein oligomeres, aus mindestens zwei Molekülen 1,5-Diisocyanatopentan bestehendes Polyisocyanat mit
a) einer mittleren Isocyanatfunktionalität 2,0 bis 5,0 und
b) einem Gehalt an Isocyanatgruppen von 11,0 bis 26,0 Gew.-% .

Erfindungsgemäße Silanverbindungen B) sind beliebige gegenüber Isocyanatgruppen reaktive Verbindungen, die mindestens eine Silangruppe aufweisen.

Geeignete Ausgangsverbindungen B) sind beispielsweise Aminosilane, der allgemeinen Formel (I) 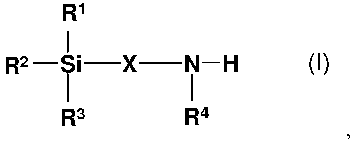 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht, der gegebenenfalls bis zu 2 Iminogruppen (-NH-) enthalten kann, und
- R⁴: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 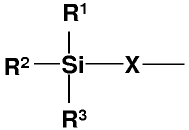 steht, in welchem R¹, R², R³ und X die vorstehend angegebene Bedeutung haben.

Geeignete Aminosilane der allgemeinen Formel (I) sind beispielsweise 3-Aminopropyltrimethoxysilan, 3-Amino-propyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyltris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethylbis(trimethylsiloxy)silan, 11-Aminoundecyltrimethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimetoxysilan, 3-(3-Aminopropoxy)-3,3-dimethyl-1-propenyltrimethoxysilan, 3-Aminopropylmethylbis(trimethylsiloxy)-silan, 3-Aminopropyltris(trimethyl-siloxy)-silan, 3-Aminopropylpentamethyldisiloxan oder beliebige Gemisch solcher Aminosilane.

Bevorzugte Aminosilane der allgemeinen Formel (I), sind solche, in welcher
- R¹, R² und R³: jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
- X: für einen linearen oder verzweigten Alkylenrest mit 3 oder 4 Kohlenstoffatomen steht, und
- R⁴: für einen gesättigten, linearen oder verzweigten, aliphatischen oder cycloaliphatischen Rest mit bis zu 6 Kohlenstoffatomen oder einen Rest der Formel 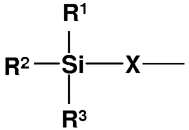 steht, in welchem R¹, R², R³ und X die vorstehend angegebene Bedeutung haben.

Besonders bevorzugte Aminosilane der allgemeinen Formel (I) sind solche, in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁴: für einen linearen Alkylrest mit bis zu 4 Kohlenstoffatomen oder einen Rest der Formel 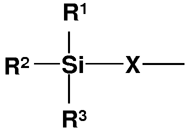 steht, in welchem R¹, R², R³ und X die vorstehend angegebene Bedeutung haben.

Ganz besonders bevorzugte Aminosilane der allgemeinen Formel (I) sind N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, Bis(3-trimethoxysilylpropyl)-amin und/oder Bis(3-triethoxysilylpropyl)amin.

Geeignete Silanverbindungen B) sind beispielsweise auch Aminosilane, der allgemeinen Formel (II) 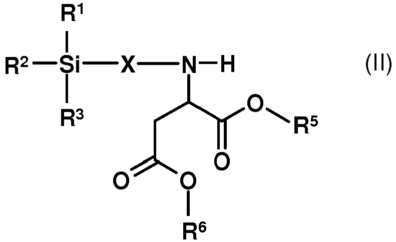 in welcher R¹, R²und R³ die für Formel (I) genannte Bedeutung haben,
- X: für einen linearen oder verzweigten organischen Rest mit mindestens 2 Kohlenstoffatomen steht und
- R⁵ und R⁶: unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Bei diesen Aminosilanen der allgemeinen Formel (II) handelt es sich um die bekannten silanfunktionellen Asparaginsäureester, wie sie sich nach der Lehre der EP-A 0 596 360 durch Umsetzung von primäre Aminogruppen tragenden Aminosilanen mit Fumarsäureestern und/oder Maleinsäureestern erhalten lassen.

Geeignete Ausgangsverbindungen zu Herstellung von Aminosilanen der allgemeinen Formel (II) sind daher grundsätzlich beliebige Aminosilane der allgemeinen Formel (I) 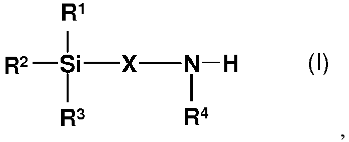 in welcher R¹, R², R³ und X die für Formel (II) genannte Bedeutung haben und R⁴ für Wasserstoff steht.

Diese werden mit Fumarsäurediestern und/oder Maleinsäurediestern der allgemeinen Formel (III) 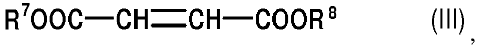 umgesetzt, in welcher die Reste R⁷ und R⁸ für gleiche oder verschiedene Reste stehen und organische Reste mit 1 bis 18, vorzugsweise 1 bis 9, besonders bevorzugt 1 bis 4, Kohlenstoffatomen bedeuten.

Bevorzugte Aminosilane der allgemeinen Formel (II) sind Umsetzungsprodukte von Aminosilanen der allgemeinen Formel (I), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R4: für Wasserstoff steht,
mit

Fumarsäurediestern und/oder Maleinsäurediestern der allgemeinen Formel (III), in welcher die Reste R⁷ und R⁸ für gleiche oder verschiedene Reste stehen und einen Methyl-, Ethyl-, n-Butyl- oder 2-Ethylhexylrest bedeuten.

Besonders bevorzugte Aminosilane der allgemeinen Formel (II) sind Umsetzungsprodukte von 3-Aminopropyltrimethoxysilan und/oder 3-Aminopropyltriethoxysilan mit Maleinsäurediethylester.

Geeignete Ausgangsverbindungen B) sind beispielsweise auch Aminosilane, der allgemeinen Formel (IV) 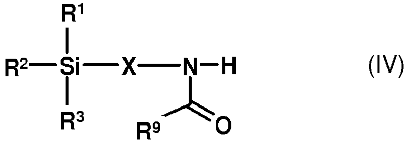 in welcher R¹, R²und R³ die für Formel (I) genannte Bedeutung haben,
- X: für einen linearen oder verzweigten organischen Rest mit mindestens 2 Kohlenstoffatomen und
- R⁹: für einen gesättigten linearen oder verzweigten, aliphatischen oder cycloaliphatischen organischen Rest mit 1 bis 8 Kohlenstoffatomen steht.

Bei diesen Aminosilanen der allgemeinen Formel (IV) handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkohoabspaltung erhalten lassen.

Geeignete Ausgangsverbindungen zu Herstellung von Aminosilanen der allgemeinen Formel (IV) sind daher grundsätzlich beliebige Aminosilane der allgemeinen Formel (I) 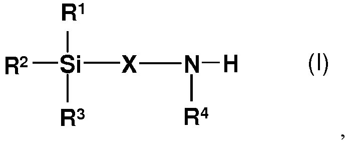 in welcher R¹, R², R³ und X die für Fromel (II) genannte Bedeutung haben und R⁴ für Wasserstoff steht.

Diese werden mit Alkylcarbonsäurealkylestern der allgemeinen Formel (V)

R⁹-COOR¹⁰ (V)

umgesetzt, in welcher
- R⁹: für Wasserstoff oder einen gesättigten linearen oder verzweigten, aliphatischen oder cycloaliphatischen organischen Rest mit 1 bis 8 Kohlenstoffatomen und
- R¹⁰: für einen gesättigten aliphatischen organischen Rest mit 1 bis 4 Kohlenstoffatomen steht.

Bevorzugte Aminosilane der allgemeinen Formel (IV) sind Umsetzungsprodukte von Aminosilanen der allgemeinen Formel (I), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R4: für Wasserstoff steht,
mit

Ameisensäurealkylestern der allgemeinen Formel (V), in welcher
- R⁹: für Wasserstoff und
- R¹⁰: für einen gesättigten aliphatischen organischen Rest mit 1 bis 4 Kohlenstoffatomen steht.

Besonders bevorzugte Aminosilane der allgemeinen Formel (IV) sind Umsetzungsprodukte von 3-Aminopropyltrimethoxysilan und/oder 3-Aminopropyltriethoxysilan mit Methylformiat und/oder Ethylformiat.

Geeignete Silanverbindungen B) sind schließlich auch beliebige Mercaptosilane der allgemeinen Formel (VI) 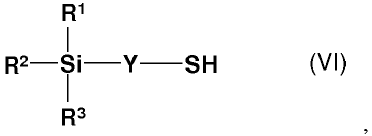 in welcher R¹, R²und R³ die für Formel (I) genannte Bedeutung haben und
- Y: für einen linearen oder verzweigten organischen Rest mit mindestens 2 Kohlenstoffatomen steht.

Geeignete Mercaptosilane B) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane B) für das erfindungsgemäße Verfahren sind solche der allgemeinen Formel (VI), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- Y: für einen linearen oder verzweigten Alkylenrest mit 2 bis 10 Kohlenstoffatomen steht.

Besonders bevorzugte Mercaptosilane B) sind solche der allgemeinen Formel (VI), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
- Y: für einen Propylenrest (-CH₂-CH₂-CH₂-) steht.

Ganz besonders bevorzugte Mercaptosilane B) sind solche der allgemeinen Formel (VI), in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-) steht,
insbesondere 3-Mercaptopropyltrimethoxysilan und/oder 3-Mercaptopropyltriethoxysilan.

Zur Herstellung der erfindungsgemäßen modifizierten Polyisocyanate werden die Ausgangspolyisocyanate A) mit den silanfunktionellen Verbindungen B) bei Temperaturen von 20 bis 200 °C, vorzugsweise 30 bis 160 °C, besonders bevorzugt bei 35 bis 120°C umgesetzt.

Die Herstellung erfolgt bevorzugt unter Einhaltung eines Äquivalentverhältnisses von Isocyanatgruppen zu gegenüber Isocyanaten reaktiven Gruppen von 50 : 1 bis 1,05 : 1, vorzugsweise von 20 : 1 bis 1,25 : 1, besonders bevorzugt 10 : 1 bis 1,5 : 1.

Die Umsetzung der Ausgangskomponenten A) und B) kann dabei ohne den Einsatz von Katalysatoren durchgeführt werden. Insbesondere bei Einsatz von Mercaptosilanen B) kann es zur Beschleunigung der Umsetzung aber von Vorteil geeignete Katalysatoren mitzuverwenden. Geeignete Katalysatoren sind insbesondere die üblichen aus der Polyurethanchemie bekannten Katalysatoren, beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-ß-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wis-mut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat.

Bevorzugte einzusetzende Katalysatoren sind tertiäre Amine, Amidine und Zinnverbindungen der genannten Art.

Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)-dilaurat (DBTL).

Die beispielhaft genannten Katalysatoren können bei der Herstellung der erfindungsgemäßen Silangruppen enthaltenden Polyisocyanate einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der verwendeten Ausgangsverbindungen, zum Einsatz.

Erfindungsgemäß kann die Herstellung lösemittelfrei durchgeführt werden. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und - butyletheracetat, N-Methylpyrrolidon und N-Methylcaprolactam, oder beliebige Gemische solcher Lösemittel.

Der Verlauf der Umsetzung kann durch z. B. titrimetrische Bestimmung des NCO-Gehaltes verfolgt werden.

Unabhängig von der Art und Menge der eingesetzten Ausgangsverbindungen A) und B) erhält man als Produkte klare, praktisch farblose Silangruppen enthaltende Polyisocyanate, die in der Regel Farbzahlen von unter 120 APHA, vorzugsweise von unter 80 APHA, besonders bevorzugt von unter 60 APHA, und einen NCO-Gehalt von 1,3 bis 24,9 Gew.-%, vorzugsweise 4,0 bis 23,5 Gew.-%, besonders bevorzugt 5,0 bis 21,0 Gew.-%, und eine mittlere NCO-Funktionalität von 1,0 bis 4,9, vorzugsweise von 1,8 bis 4,8, besonders bevorzugt von 2,0 bis 4,0 aufweisen.

Die erfindungsgemäßen Silangruppen enthaltenden Polyisocyanate stellen wertvolle Ausgangsmaterialien zur Herstellung von Polyurethan- und/oder Polyharnstoff-Kunststoffen nach dem Isocyanat-Polyadditionsverfahren dar.

Sie können dabei lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen.

Die genannten bevorzugten Ausführungsformen und Parameter gelten analog auch für das erfindungsgemäße Verfahren zur Herstellung der modifizierten Polyisocyanate.

Gegenstand der Erfindung ist ebenfalls die Verwendung der erfindungsgemäßen modifizierten Polyisocyanate als Ausgangskomponente bei der Herstellung von Polyurethankunststoffen.

Weiterhin ist die Verwendung von Polyisocyanatgemischen enthaltend erfindungsgemäße modifizierte Polyisocyanate und Polyisocyanate mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen als Ausgangskomponente bei der Herstellung von Polyurethankunststoffen, Gegenstand der Erfindung.

Die erfindungsgemäßen Silangruppen enthaltenden Polyisocyanate eignen sich in hervorragender Weise als Vernetzerkomponenten oder Bestandteil von Vernetzerkomponenten für Zweikomponenten-Polyurethanlacke, in denen als Polyhydroxylverbindungen die üblichen Polyetherpolyole, Polyesterpolyole Polycarbonatpolyole und/oder Polyacrylatpolyole als Reaktionspartner für die Polyisocyanate vorliegen. Besonders bevorzugte Reaktionspartner für die erfindungsgemäßen Verfahrensprodukte sind Hydroxylgruppen aufweisende Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren.

Im allgemeinen besitzen die mit den erfindungsgemäßen Silangruppen enthaltenden Polyisocyanaten formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(III)-octoat oder Molybdänglykolat. Daneben können auch Katalysatoren mitverwendet werden, die die Hydrolyse und Kondensation von Alkoxysilangruppen oder deren Reaktion mit den Hydroxylgruppen der als Bindemittel eingesetzten Polyolkomponenten beschleunigen. Derartige Katalysatoren sind neben vorstehend genannten Isocyanatkatalysatoren beispielsweise auch Säuren, wie z. B. p-Toluolsulfonsäure, Trifluormethansulfonsäure, Essigsäure, Trifluoressigsäure und Dibutylphosphat, Basen, wie z. B. N-substituierte Amidine wie 1,5-Diazabicyclo[4.3.0]non-5-en (DBN) und 1,5-Diazabicyclo[5.4.0]undec-7-en (DBU), aber auch Metallsalze oder metallorganische Verbindungen, wie z. B. Tetraisopropyltitanat, Tetrabutyltitanat, Titan(IV)acetylacetonat, Aluminiumacetylacetonat, Aluminiumtriflat oder Zinntriflat.

Selbstverständlich können die erfindungsgemäßen Silangruppen enthaltenden Polyisocyanate auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Die erfindungsgemäßen Verfahrensprodukte können auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluss freie Aminogruppen und im Falle der Oxazolane auch freie Hydroxylgruppen, die unter Vernetzung mit der Isocyanatgruppen der Silangruppen enthaltenden Thioallophanatpolyisocyanate abreagieren.

Die erfindungsgemäßen Silangruppen enthaltenden Polyisocyanate eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wässriger Zweikomponenten-Polyurethansysteme.

Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Gegebenenfalls können den mit den erfindungsgemäßen Silangruppen enthaltenden Polyisocyanaten formulierten Beschichtungssystemen auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)methyldiethoxysilan, (3-Glycidyloxypropyl)trimethoxy-silan, Phenyltrimethoxysilan oder Phenyltriethoxysilan, oder Gemische solcher Silanverbindungen als Reaktionspartner zugesetzt werden.

In allen vorstehend beschriebenen Verwendungen der erfindungsgemäßen Polyisocyanate können diese sowohl alleine als auch in Abmischung mit beliebigen weiteren Polyisocyanaten mit aliphatisch, cycloaliphatisch, araliphatisch und/oder aromatisch gebundenen Isocyanatgruppen, insbesondere den bekannten Lackpolyisocyanaten mit Uretdion-, Isocyanurat-, Iminooxadiazindion-, Urethan-, Allophanat-, Biuret- und/oder Oxadiazintrionstruktur, wie sie beispielhaft in Laas et al., J. Prakt. Chem. 336, 1994, 185-200*,* der DE-A 1 670 666, DE-A 3 700 209, DE-A 3 900 053, EP-A 0 330 966, EP-A 0 336 205, EP-A 0 339 396 und EP-A 0 798 299 beschrieben sind, als Isocyanatkomponente zum Einsatz kommen.

Gegenstand der Erfindung ist daher auch die Verwendung der erfindungsgemäßen Silangruppen enthaltenden PDI-Polyisocyanate zur Abmischung mit Polyisocyanaten mit aliphatisch, cycloaliphatisch, araliphatisch und/oder aromatisch gebundenen Isocyanatgruppen, die Uretdion-, Isocyanurat-, Iminooxadiazindion-, Urethan-, Allophanat-, Biuret- und/oder Oxadiazintrionstruktur aufweisen, sowie die daraus resultierenden Silangruppen enthaltenden Polyisocyanatgemische selbst.

In Zweikomponenten Polyurethan- und/oder Polyharnstofflacken und -beschichtungen, die als Vernetzerkomponenten oder Bestandteil von Vernetzerkomponenten für Polyole und/oder Polyamine die erfindungsgemäßen Silangruppen enthaltenden Polyisocyanate enthalten, liegen die Reaktionspartner üblicherweise in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Gegebenenfalls können die erfindungsgemäßen Polyisocyanatgemische in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Silangruppen enthaltenden Polyisocyanate formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände dieser Erfindung sind somit Beschichtungsmittel enthaltend die erfindungsgemäßen modifizierten Polyisocyanate, sowie die mit diesen Beschichtungsmitteln beschichteten Substrate.

Ebenfalls Gegenstand der Erfindung sind Beschichtungsmittel enthaltend Polyisocyanatgemische enthaltend die erfindungsgemäßen modifizierten Polyisocyanate und Polyisocyanate mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen, sowie die mit diesen Beschichtungsmitteln beschichteten Substrate.

Die erfindungsgemäßen Silangruppen enthaltenden PDI-Polyisocyanate liefern im Vergleich zu analog aufgebauten Polyisocyanaten des Standes der Technik auf Basis von HDI, Beschichtungen, die nach meschanischer Belastung einen höheren Restglanz, d. h. eine geringere Verkratzungsneigung aufweisen.

Darüberhinaus zeigen die mit den erfindungsgemäßen Silangruppen enthaltenden PDI-Polyisocyanatgemischen hergestellten Lackfilme bei gleicher NCO-Funktionalität und gleichem Anteil an Silangruppen teilweise auch eine deutlich verbesserte Lösungsmittel- und Chemikalienbeständigkeit als Silan-modifizierte HDI-Polyisocyanate.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Gehalte (mol-%) der in den Ausgangspolyisocyanaten vorliegenden Uretdion-, Isocyanurat-, Allophanat-, Iminooxadiazindion- und/oder Biuretstrukturen wurden aus den Integralen protokonenentkoppelter ¹³C-NMR-Spektren (aufgenommen an einem Gerät Bruker DPX-400) errechnet und beziehen sich jeweils auf die Summe an vorliegenden Uretdion-, Isocyanurat-, Allophanat-, Iminooxadiazindion- und/oder Biuretstrukturen. Im Falle von PDI- und HDI-Polyisocyanaten weisen die einzelnen Strukturelemente folgende chemische Verschiebungen (in ppm) auf: Uretdion: 157.1; Isocyanurat: 148.4; Allophanat: 155.7 und 153.8, Biuret: 155,5; Iminooxadiazindion: 147.8, 144.3 und 135.3. Die Messung der Hazen-Farbzahl erfolgte spektrofotometrisch nach DIN EN 1557 mit einem LICO 400-Spektrofotometer der Fa. Lange, DE.

### Polyisocyanate A)

### Polyisocyanat A1)

1000g (6,49 mol) 1,5-Pentamethylendiisocyanat (PDI) wurden in einen Vierhalskolben ausgestattet mit Rührer, Rückflusskühler, N₂-Durchleitungsrohr und Innenthermometer vorgelegt, drei mal bei Raumtemperatur durch Anlegen eines Vakuums von ca. 50 mbar entgast und mit Stickstoff belüftet. Anschließend wurde der Ansatz auf 60°C erwärmt und die Katalysatorlösung (1,5 %ige N,N,N-Trimethyl-N-benzylammoniumhydroxid Lösung in einem 1:1-Gemisch von Methanol und 2-Ethyl-1-hexanol) in einer solchen Geschwindigkeit zudosiert, dass sich die Temperatur des Reaktionsgemisches trotz der exotherm einsetzenden Trimerisierungsreaktion auf maximal 80°C erwärmte. Nach Erreichen eines NCO-Gehalts von 47,8 Gew% wurde mit Dibutylphosphat (equimolare Menge bezogen auf eingesetztes Trimethylbenzylammoniumhydroxid) die Reaktion gestoppt und das nicht umgesetzte monomere PDI bei einer Temperatur von 140°C und einem Druck von 0,5 mbar im Dünnschichtverdampfer abgetrennt. Es wurde ein praktisch farbloses Polyisocyanuratpolyisocyanat erhalten, das die folgenden Kenndaten aufwies:

| | |
|---|---|
| NCO-Gehalt: | 24,2 % |
| NCO-Funktionalität (ber.): | ca. 3,3 |
| Viskosität (23 °C): | 2200 mPas |
| monomeres PDI: | 0,06 % |
| Farbzahl (APHA): | 30 Hazen |

Verteilung der oligomeren Strukturtypen:

| | |
|---|---|
| Isocyanurat: | 78 mol-% |
| Iminooxadiazindion | 3 mol-% |
| Uretdion | 3 mol-% |
| Allophanat: | 16 mol-% |

### Ausgangspolyisocyanat A2)

Nach dem für Ausgangspolyisocyanat A1) beschriebenen Verfahren und unter Verwendung der dort beschriebenen Katalysatorlösung wurden 1000g (6,49 mol) PDI bis zu einem NCO-Gehalt von 36,7 % umgesetzt. Nach Deaktivierung des Katalysators und anschließender destillativer Entfernung des nicht umgesetzten monomeren PDI mit Hilfe eines Dünnschichtverdampfers bei 140°C und 0,5 mbar erhielt man ein praktisch farbloses Polyisocyanuratpolyisocyanat, das die folgenden Kenndaten aufwies:

| | |
|---|---|
| NCO-Gehalt: | 21,7 % |
| NCO-Funktionalität (ber.): | ca. 3,5 |
| Viskosität (23 °C): | 9850 mPas |
| monomeres PDI: | 0,05 % |
| Farbzahl (APHA): | 34 Hazen |

Verteilung der oligomeren Strukturtypen:

| | |
|---|---|
| Isocyanurat: | 84 mol-% |
| Iminooxadiazindion | 3 mol-% |
| Uretdion | 3 mol-% |
| Allophanat: | 10 mol-% |

### Ausgangspolyisocyanat A3)

1016 g (6,6 mol) PDI wurden in Anlehnung an das Verfahren der EP-A 0 150 769 mit 1,0 mol Wasser in Gegenwart von 0,05 mol Pivalinsäureanhydrid bei einer Temperatur von 125°C umgesetzt. Nach Erreichen eines NCO-Gehaltes von 42,7 % wurde nicht umgesetztes PDI gemeinsam mit Pivalinsäureanhydrid durch Dünnschichtdestillation bei einer Temperatur von 130°C und einem Druck von 0,2 mbar entfernt. Man erhielt ein praktisch farbloses Biuretpolyisocyanat, das die folgenden Kenndaten aufwies:

| | |
|---|---|
| NCO-Gehalt: | 24,2 % |
| NCO-Funktionalität: | ca. 3,2 |
| Viskosität (23°C): | 8.000 mPas |
| Monomeres PDI: | 0,2 % |
| Farbzahl (APHA): | 26 Hazen |

Verteilung der oligomeren Strukturtypen:

| | |
|---|---|
| Biuret: | 89,3 mol-% |
| Uretdion | 10,7 mol-% |

### Beispiel 1)

### (erfindungsgemäß, Silan-modifiziertes PDI-Polyisocyanat)

620 g (3,2 val) des Ausgangspolyisocyanates A2) wurden in 385 g Butylacetat gelöst bei 30°C unter trockenem Stickstoff vorgelegt und innerhalb von 90 min unter Rühren mit 282 g (1,2 val) N-(n-Butyl)-3-aminopropyltrimethoxysilan so versetzt, dass die Temperatur des Reaktionsgemisches 50°C nicht überstieg. Nach beendeter Zugabe wurde weitere 30 min gerührt. Nach Abkühlen auf Raumtemperatur lag ein farbloses, klares Polyisocyanatgemisch mit folgenden Kenndaten vor:

| | |
|---|---|
| NCO-Gehalt: | 4,4 % |
| NCO-Funktionalität: | 2,2 |
| Feststoff-Gehalt: | 70 % |
| Viskosität (23 °C): | 99 mPas |
| Farbzahl (APHA): | 24 Hazen |

### Beispiel 2)

### (Vergleich, Silan-modifiziertes HDI-Polyisocyanat)

620 g (3,2 val) eines Isocyanuratgruppen-haltigen Polyisocyanates auf Basis von HDI (Verteilung der oligomeren Strukturtypen: Isocyanurat: 88 mol-%, Iminooxadiazindion: 5 mol-%, Uretdion: 3 mol-%, Allophanat: 4 mol-%) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23 °C) wurden in 385 g Butylacetat gelöst bei 30°C unter trockenem Stickstoff vorgelegt und innerhalb von 90 min unter Rühren mit 282 g (1,2 val) N-(n-Butyl)-3-aminopropyltrimethoxysilan so versetzt, dass die Temperatur des Reaktionsgemisches 50°C nicht überstieg. Nach beendeter Zugabe wurden weitere 30 min gerührt. Nach Abkühlen auf Raumtemperatur lag ein farbloses, klares Polyisocyanatgemisch mit folgenden Kenndaten vor:

| | |
|---|---|
| NCO-Gehalt: | 4,4 % |
| NCO-Funktionalität: | 2,2 |
| Feststoff-Gehalt: | 70 % |
| Viskosität (23 °C): | 85 mPas |
| Farbzahl: | 26 APHA |

### Beispiel 3)

### (erfindungsgemäß, Silan-modifiziertes PDI-Polyisocyanat)

620 g (3,2 val) des Ausgangspolyisocyanates A2) wurden in 800 g Butylacetat gelöst bei 30°C unter trockenem Stickstoff vorgelegt und innerhalb von 90 min unter Rühren mit einem Gemisch aus 235 g (1,0 val) N-(n-Butyl)-3-aminopropyltrimethoxysilan und 341 g (1,0 val) Bis(3-trimethoxysilylpropyl)amin so versetzt, dass die Temperatur des Reaktionsgemisches 50°C nicht überstieg. Nach beendeter Zugabe wurde weitere 30 min gerührt. Nach Abkühlen auf Raumtemperatur lag ein farbloses, klares Polyisocyanatgemisch mit folgenden Kenndaten vor:

| | |
|---|---|
| NCO-Gehalt: | 2,5 % |
| NCO-Funktionalität: | 1,3 |
| Feststoff-Gehalt: | 60 % |
| Viskosität (23 °C): | 80 mPas |
| Farbzahl: | 22 APHA |

### Beispiel 4)

### (erfindungsgemäß, Silan-modifiziertes PDI-Polyisocyanat)

620 g (3,2 val) des Ausgangspolyisocyanates A2) wurden in 225 g Butylacetat gelöst bei 30°C unter trockenem Stickstoff vorgelegt und innerhalb von 90 min unter Rühren mit 275 g (0,8 val) Bis(3-trimethoxysilylpropyl)amin so versetzt, dass die Temperatur des Reaktionsgemisches 50°C nicht überstieg. Nach beendeter Zugabe wurde weitere 30 min gerührt. Nach Abkühlen auf Raumtemperatur lag ein farbloses, klares Polyisocyanatgemisch mit folgenden Kenndaten vor:

| | |
|---|---|
| NCO-Gehalt: | 9,0 % |
| NCO-Funktionalität: | 2,6 |
| Feststoff-Gehalt: | 80 % |
| Viskosität (23 °C): | 860 mPas |
| Farbzahl: | 27 APHA |

### Beispiel 5)

### (erfindungsgemäß, Silan-modifiziertes PDI-Polyisocyanat)

700 g (4,0 val) des Ausgangspolyisocyanates A1) wurden in 280 g Butylacetat gelöst bei 30°C unter trockenem Stickstoff vorgelegt und innerhalb von 90 min unter Rühren mit 421 g (1,2 val) eines gemäß Beispiel 5 der EP-A 0 596 360 hergestellten Adduktes von Aminopropyltrimethoxysilan an Maleinsäurediethylester so versetzt, dass die Temperatur des Reaktionsgemisches 50°C nicht überstieg. Nach beendeter Zugabe wurde weitere 30 min gerührt. Nach Abkühlen auf Raumtemperatur lag ein farbloses, klares Polyisocyanatgemisch mit folgenden Kenndaten vor:

| | |
|---|---|
| NCO-Gehalt: | 8,4 % |
| NCO-Funktionalität: | 2,3 |
| Feststoff-Gehalt: | 80 % |
| Viskosität (23 °C): | 1080 mPas |
| Farbzahl: | 32 APHA |

### Beispiel 6)

### (Vergleich, Silan-modifiziertes HDI-Polyisocyanat)

700 g (3,8 val) eines Isocyanuratgruppen-haltigen Polyisocyanates auf Basis von HDI (Verteilung der oligomeren Strukturtypen: Isocyanurat: 89 mol-%, Iminooxadiazindion: 3 mol-%, Uretdion: 3 mol-%, Allophanat: 5 mol-%) mit einem NCO-Gehalt von 23,0 %, einer mittleren NCO-Funktionalität von 3,3 (nach GPC), einem Gehalt an monomerem HDI von 0,1 % und einer Viskosität von 1200 mPas (23 °C) wurden in 280 g Butylacetat gelöst bei 30°C unter trockenem Stickstoff vorgelegt und innerhalb von 90 min unter Rühren mit 421 g (1,2 val) eines gemäß Beispiel 5 der EP-A 0 596 360 hergestellten Adduktes von Aminopropyltrimethoxysilan an Maleinsäurediethylester so versetzt, dass die Temperatur des Reaktionsgemisches 50°C nicht überstieg. Nach beendeter Zugabe wurde weitere 30 min gerührt. Nach Abkühlen auf Raumtemperatur lag ein farbloses, klares Polyisocyanatgemisch mit folgenden Kenndaten vor:

| | |
|---|---|
| NCO-Gehalt: | 7,8 % |
| NCO-Funktionalität: | 2,3 |
| Feststoff-Gehalt: | 80 % |
| Viskosität (23 °C): | 570 mPas |
| Farbzahl: | 44 APHA |

### Beispiel 7)

### (erfindungsgemäß, Silan-modifiziertes PDI-Polyisocyanat)

620 g (3,2 val) des Ausgangspolyisocyanates A2) wurden in 390 g Butylacetat gelöst bei 60°C unter trockenem Stickstoff vorgelegt, mit 294 g (1,5 val) Mercaptopropyltrimethoxysilan versetzt und nach Zugabe von 0,02 g (20 ppm) 1,4-Diazabicyclo[2.2.2]octan (DABCO) eine Stunde gerührt, bis ein NCO-Gehalt von 5,5 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 5,5 % |
| NCO-Funktionalität: | 1,9 |
| Feststoff-Gehalt: | 70 % |
| Viskosität (23 °C): | 53 mPas |
| Farbzahl: | 20 APHA |

### Beispiel 8)

### (Vergleich, Silan-modifiziertes HDI-Polyisocyanat)

620 g (3,2 val) des bei der Herstellung des Vergleichspolyisocyanates A2) beschriebenen Isocyanuratgruppen-haltigen Polyisocyanates auf Basis von HDI wurden in 390 g Butylacetat gelöst bei 60°C unter trockenem Stickstoff vorgelegt, mit 294 g (1,5 val) Mercaptopropyltrimethoxysilan versetzt und nach Zugabe von 0,02 g (20 ppm) DABCO eine Stunde gerührt, bis ein NCO-Gehalt von 5,5 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 5,5 % |
| NCO-Funktionalität: | 1,9 |
| Feststoff-Gehalt: | 70 % |
| Viskosität (23 °C): | 56 mPas |
| Farbzahl: | 26 APHA |

### Beispiel 9)

### (erfindungsgemäß, Silan-modifiziertes PDI-Polyisocyanat)

620 g (3,2 val) des Ausgangspolyisocyanates A2) wurden in 560 g Butylacetat gelöst bei 60°C unter trockenem Stickstoff vorgelegt, mit einem Gemisch aus 160 g (0,8 val) Mercaptopropyltrimethoxysilan und 270 g (0,8 val) Bis(3-trimethoxysilylpropyl)amin versetzt und eine Stunde gerührt, bis ein NCO-Gehalt von 4,2 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 4,2 % |
| NCO-Funktionalität: | 1,8 |
| Feststoff-Gehalt: | 65 % |
| Viskosität (23 °C): | 63 mPas |
| Farbzahl: | 24 APHA |

### Beispiel 10)

### (Vergleich, Silan-modifiziertes HDI-Polyisocyanat)

620 g (3,2 val) des bei der Herstellung des Vergleichspolyisocyanates A2) beschriebenen Isocyanuratgruppen-haltigen Polyisocyanates auf Basis von HDI wurden in 560 g Butylacetat gelöst bei 60°C unter trockenem Stickstoff vorgelegt, mit einem Gemisch aus 160 g (0,8 val) Mercaptopropyltrimethoxysilan und 270 g (0,8 val) Bis(3-trimethoxysilylpropyl)amin versetzt und eine Stunde gerührt, bis ein NCO-Gehalt von 4,2 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 4,2 % |
| NCO-Funktionalität: | 1,8 |
| Feststoff-Gehalt: | 65 % |
| Viskosität (23 °C): | 55 mPas |
| Farbzahl: | 28 APHA |

### Beispiel 11)

### (erfindungsgemäß, Silan-modifiziertes PDI-Polyisocyanat)

700 g (4,0 val) des Ausgangspolyisocyanates A1) wurden in 90 g Butylacetat gelöst bei 60°C unter trockenem Stickstoff vorgelegt, mit 100 g (0,5 val) Mercaptopropyltrimethoxysilan versetzt und nach Zugabe von 0,02 g (20 ppm) 1,4-Diazabicyclo[2.2.2]octan (DABCO) eine Stunde gerührt, bis ein NCO-Gehalt von 5,5 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 16,5 % |
| NCO-Funktionalität: | 2,9 |
| Feststoff-Gehalt: | 90 % |
| Viskosität (23 °C): | 2050 mPas |
| Farbzahl: | 28 APHA |

### Beispiel 12)

### (erfindungsgemäß, Silan-modifiziertes PDI-Polyisocyanat)

700 g (4,0 val) des Ausgangspolyisocyanates A1) wurden bei 60°C unter trockenem Stickstoff vorgelegt, mit 40 g (0,2 val) Mercaptopropyltrimethoxysilan versetzt und nach Zugabe von 0,02 g (30 ppm) 1,4-Diazabicyclo[2.2.2]octan (DABCO) eine Stunde gerührt, bis ein NCO-Gehalt von 5,5 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 21,6 % |
| NCO-Funktionalität: | 3,1 |
| Feststoff-Gehalt: | 100 % |
| Viskosität (23 °C): | 2680 mPas |
| Farbzahl: | 34 APHA |

### Beispiel 13)

### (erfindungsgemäß, Silan-modifiziertes PDI-Polyisocyanat)

520 g (3,2 val) des Ausgangspolyisocyanates A3) wurden in 196 g Butylacetat gelöst bei 60°C unter trockenem Stickstoff vorgelegt, mit 265 g (1,35 val) Mercaptopropyltrimethoxysilan versetzt und nach Zugabe von 0,02 g (20 ppm) 1,4-Diazabicyclo[2.2.2]octan (DABCO) eine Stunde gerührt, bis ein NCO-Gehalt von 7,1 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 7,1 % |
| NCO-Funktionalität: | 1,8 |
| Feststoff-Gehalt: | 80 % |
| Viskosität (23 °C): | 610 mPas |
| Farbzahl: | 22 APHA |

### Beispiel 14)

### (Vergleich, Silan-modifiziertes HDI-Polyisocyanat)

650 g (3,4 val) Biuretgruppen-haltigen Polyisocyanates auf Basis von HDI (Verteilung der oligomeren Strukturtypen: Biuret: 88,7 mol-%, Uretdion: 11,3 mol-%) mit einem NCO-Gehalt von 21,9 %, einer mittleren NCO-Funktionalität von 3,6 (nach GPC), einem Gehalt an monomerem HDI von 0,1 % und einer Viskosität von 9.700 mPas (23 °C) wurden in 236 g Butylacetat gelöst bei 60°C unter trockenem Stickstoff vorgelegt, mit 294 g (1,5 val) Mercaptopropyltrimethoxysilan versetzt und nach Zugabe von 0,02 g (20 ppm) DABCO eine Stunde gerührt, bis ein NCO-Gehalt von 6,7 %, entsprechend einem vollständigen Umsatz, erreicht war. Nach Abkühlen auf Raumtemperatur lag ein farbloses, klares Polyisocyanatgemisch mit folgenden Kenndaten vor:

| | |
|---|---|
| NCO-Gehalt: | 6,7 % |
| NCO-Funktionalität: | 2,0 |
| Feststoff-Gehalt: | 80 % |
| Viskosität (23 °C): | 920 mPas |
| Farbzahl: | 28 APHA |

### Beispiel 15 (Verwendung)

100 Gew.-Teile eines handelsüblichen Polyacrylatpolyols, 65 %ig gelöst in Butylacetat/Xylol (3 : 1) mit einer OH-Zahl von 3,0 mg KOH/g bezogen auf Lieferform (Setalux^{®} A 665 BA/X, Nuplex GmbH, Bitterfeld, Deutschland), wurden mit 6,5 Gew.-Teilen einer 10 %igen Lösung eines handelsüblichen Verlaufsmittels (Byk^{®} 331, BYK-Chemie GmbH, Wesel, Deutschland) in MPA, 22,2 Gew.-Teilen einer 10 %igen Lösung von Tetra-n-butylammoniumbenzoat in MPA als Katalysator und 32,7 Gew.-Teilen Butylacetat als Lösungsmittel gemischt. Diesem Ansatz wurden 169,0 Gew.-Teile des erfindungsgemäßen Polyisocyanates aus Beispiel 1 zugesetzt (entsprechend einem Äquivalentverhältnis von Isocyanatgruppen zu alkoholischen Hydroxylgruppen von 1 : 1) und die Mischung durch fünfminütiges Rühren mit 1000 U/min homogenisiert.

Entsprechend wurden nach dem gleichen Verfahren aus jeweils 100 Gew.-Teilen Setalux^{®} A 665 BA/X und den erfindungsgemäßen Polyisocyanaten bzw. Vergleichspolyisocyanaten nach Beispiel 2 sowie 7 bis 12 (jeweils entsprechend einem Äquivalentverhältnis von Isocyanatgruppen zu alkoholischen Hydroxylgruppen von 1 : 1) Klarlacke hergestellt.

Die so erhaltenen Klarlackformulierungen, die vergleichbare Topfzeiten von ca. 2 Stunden aufwiesen, wurden mit Hilfe einer Airless-Spritzanlage jeweils in einer Nassfilm-Schichtdicke von ca. 60 µm auf eine Glasplatte sowie auf ein mit einem schwarzen Basislack vorbeschichtetes Blech appliziert. Nach einer kurzen Ablüftzeit wurden die Filme im Trockenschrank bei 140°C für 30 min getrocknet, anschließend für 16 h bei 60°C gelagert.

Die nachfolgende Tabelle zeigt lacktechnische Eigenschaften der erhaltenen Beschichtungen.

| **Polyisocyanat aus** | **Beispiel 1** | **Beispiel 2** (Vergleich) | **Beispiel 5** | **Beispiel 6** (Vergleich) | **Beispiel 7** | **Beispiel 8** (Vergleich) | **Beispiel 9** | **Beispiel 10** (Vergleich) |
|---|---|---|---|---|---|---|---|---|
| **Polyisocyanat** [Gew.-Teile] ^{a)} | 169,0 | 169,0 | 88,4 | 95,2 | 135,0 | 135,0 | 176,8 | 176,8 |
| **Pendelhärte nach König** (DIN 53157) [s] | 189 | 187 | 191 | 189 | 195 | 185 | 198 | 189 |

| **Lösemittelbeständigkeit** ^{b), c)} | | | | | | | | |
|---|---|---|---|---|---|---|---|---|
| Xylol (5 min) | 0 | 0 | 0 | 0 | 0 | 0 | 0 | 0 |
| MPA (5 min) | 0 | 0 | 0 | 0 | 0 | 0 | 0 | 0 |
| Ethylacetat (5 min) | 0 | 0 | 0 | 0 | 0 | 0 | 0 | 0 |
| Aceton (5 min) | 1 | 1 | 1 | 3 | 1 | 1 | 0 | 1 |

| **Chemikalienbeständigkeit** ^{b), d)} | | | | | | | | |
|---|---|---|---|---|---|---|---|---|
| Baumharz | > 68 / >68 | 52/52 | 60 / 60 | 50 / 50 | > 68 / >68 | > 68 / >68 | > 68 / >68 | > 68 / >68 |
| Pankreatin (1% in Wasser) | 42/42 | 36 / 36 | 36 / 36 | 36 / 36 | 44/44 | 36/42 | 36 / 36 | 36 / 36 |
| Wasser, deionisiert | > 68 / >68 | > 68 / >68 | > 68 / >68 | > 68 / >68 | > 68 / >68 | > 68 / >68 | > 68 / >68 | > 68 / >68 |
| Natronlauge (1% in Wasser) | 66 / 66 | 64 / 64 | 52/52 | 49/49 | 59 / 59 | 50/50 | 57 / 57 | 55 / 55 |
| Schwefelsäure (1% in Wasser) | 41/41 | 41 / 41 | 36 / 36 | 36 / 36 | 41 / 41 | 36 / 36 | 40 / 40 | 36 / 36 |
| | 15,4 | 17,5 | 10,6 | 23,6 | 11,2 | 12,8 | 12,7 | 15,7 |

| **Kratzbeständigkeit** ^{e), f)} | | | | | | | | |
|---|---|---|---|---|---|---|---|---|
| Ausgangsglanz | 86 | 86 | 87 | 85 | 89 | 88 | 87 | 88 |
| Glanz nach Verkratzung | 56 | 51 | 29 | 28 | 43 | 42 | 72 | 72 |
| relativer Restglanz | 65,1% | 59,3 % | 33,3 % | 32,9 % | 48,3 % | 47,7 % | 82,8 | 81,8 % |
| Glanz nach Reflow | 80 | 77 | 68 | 52 | 81 | 77 | 85 | 83 |
| relativer Restglanz | 93,0 % | 89,5 % | 78,2 % | 61,2 % | 91,0% | 87,5 % | 97,7 % | 94,3 % |
| ^{a)} bezogen auf 100 Gew.-Teile eingesetztes Setalux^{®} A 665 BA/X | | | | | | | | |
| ^{b)} gemessen an Klarlacken auf Glasplatte | | | | | | | | |
| ^{c)} Bewertung: 0 - 5 (0 = Lackfilm unverändert; 5 = völlig aufgelöst) | | | | | | | | |
| ^{d)} gemessen im Gradientenofen, Angabe in °C nach Einwirkzeit von 1 h / 24 h | | | | | | | | |
| ^{e)} gemessen an Klarlacken auf einem mit einem schwarzen Basislack vorbeschichteten Blech | | | | | | | | |
| ^{f)} Hammertest mit Stahlwolle (Trockenverkratzung): Ein Hammer (Gewicht: 800 g ohne Stiel), der an seiner flachen Seite mit Stahlwolle 00 bespannt war, wurde vorsichtig im rechten Winkel auf die beschichtete Oberfläche aufgesetzt und ohne zu verkanten und ohne zusätzliche Körperkraft in einer Spur über die Beschichtung geführt. Es wurden jeweils 50 Doppelhübe durchgeführt. Nach der Belastung mit dem Verkratzungsmedium wurde die Prüffläche mit einem weichen Tuch gereinigt und anschließend der Glanz (20°-Winkel) nach DIN EN ISO 2813 quer zur Verkratzungsrichtung gemessen. Die Angaben zur Trockenverkratzung erfolgen in Glanzgraden sowie in % Restglanz, gemessen unmittelbar nach Verkratzung sowie nach "Reflow"-Bedingungen, d. h. zweistündiger Lagerung bei 60°C, jeweils absolut und relativ zum Ausgangsglanz der Beschichtung. | | | | | | | | |

| **Polyisocyanat aus** | **Beispiel 13** | **Beispiel 14** (Vergleich) | | | | | | |
|---|---|---|---|---|---|---|---|---|
| **Polyisocyanat** [Gew.-Teile] ^{a)} | 104,6 | 110,8 | | | | | | |
| **Pendelhärte nach König** (DIN 53157) [s] | 196 | 198 | | | | | | |

| **Lösemittelbeständigkeit** ^{b), c)} | | | | | | | | |
|---|---|---|---|---|---|---|---|---|
| Xylol (5 min) | 0 | 0 | | | | | | |
| MPA (5 min) | 0 | 0 | | | | | | |
| Ethylacetat (5 min) | 0 | 0 | | | | | | |
| Aceton (5 min) | 1 | 1 | | | | | | |

| **Chemikalienbeständigkeit** ^{b), d)} | | | | | | | | |
|---|---|---|---|---|---|---|---|---|
| Baumharz | 66 / 68 | 62 / 64 | | | | | | |
| Pankreatin (1% in Wasser) | 36 / 36 | 36 / 36 | | | | | | |
| Wasser, deionisiert | > 68 / >68 | > 68 / >68 | | | | | | |
| Natronlauge (1% in Wasser) | 67/67 | 60 / 60 | | | | | | |
| Schwefelsäure (1% in Wasser) | 41/41 | 39 / 39 | | | | | | |
| **Glanzschleier** (**Haze**) ^{e)} | 10,5 | 10,4 | | | | | | |

| **Kratzbeständigkeit** ^{e), f)} | | | | | | | | |
|---|---|---|---|---|---|---|---|---|
| Ausgangsglanz | 89 | 88 | | | | | | |
| Glanz nach Verkratzung | 48 | 38 | | | | | | |
| relativer Restglanz | 53,9 % | 43,2 % | | | | | | |
| Glanz nach Reflow | 79 | 66 | | | | | | |
| relativer Restglanz | 88,8 % | 75,0 % | | | | | | |

| | | | | | | | | |
|---|---|---|---|---|---|---|---|---|
| ^{a) - f)} siehe vorherige Seite | | | | | | | | |

## Patentansprüche

1. Modifizierte Polyisocyanate, erhältlich durch Umsetzung von wenigstens einem Polyisocyanat A) auf Basis von 1,5-Diisocyanatopentan mit wenigstens einer gegenüber Isocyanatgruppen reaktiven Silanverbindung B), wobei es sich bei dem Polyisocyanat A) um ein oligomeres, aus mindestens zwei Molekülen 1,5-Diisocyanatopentan bestehende Polyisocyanate mit Uretdion-, Isocyanurat-, Allophanat-, Biuret-, Iminooxadiazindion- und/oder Oxadiazintrionstruktur oder beliebige Gemische solcher Polyisocyanate handelt.

2. Modifizierte Polyisocyanate gemäß Anspruch 1, **dadurch gekennzeichnet, dass** es sich bei den Polyisocyanate A) um oligomere, aus mindestens zwei Molekülen 1,5-Diisocyanatopentan bestehende Polyisocyanate mit
a) einer mittleren Isocyanatfunktionalität 2,0 bis 5,0 und
b) einem Gehalt an Isocyanatgruppen von 11,0 bis 26,0 Gew.-% handelt.

3. Modifizierte Polyisocyanate gemäß Anspruch 1 oder 2, **dadurch gekennzeichnet, dass** es sich bei den gegenüber Isocyanatgruppen reaktiven Silanverbindungen B) um Aminosilane, der allgemeinen Formel (I) 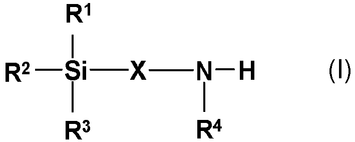 handelt, in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht, der gegebenenfalls bis zu 2 Iminogruppen (-NH-) enthalten kann,
und
R⁴ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 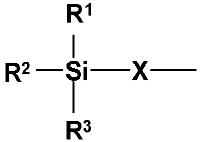 steht, in welchem R¹, R², R³ und X die vorstehend angegebene Bedeutung haben.

4. Modifizierte Polyisocyanate gemäß Anspruch 3, **dadurch gekennzeichnet, dass** es sich bei den gegenüber Isocyanatgruppen reaktiven Silanverbindungen B) um N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, Bis(3-trimethoxysilylpropyl)-amin und/oder Bis(3-triethoxysilylpropyl)amin handelt.

5. Modifizierte Polyisocyanate gemäß einem der vorstehenden Ansprüche, **dadurch gekennzeichnet, dass** es sich bei den gegenüber Isocyanatgruppen reaktiven Silanverbindungen B) um Aminosilane, der allgemeinen Formel (II) 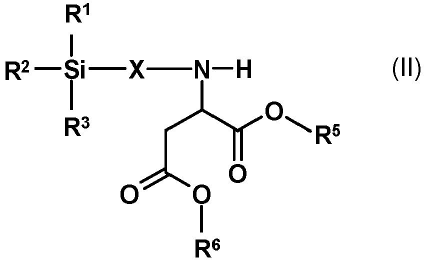 handelt, in welcher R1, R2und R3 die in Anspruch 3 genannte Bedeutung haben,
X für einen linearen oder verzweigten organischen Rest mit mindestens 2 Kohlenstoffatomen steht und
R⁵ und R⁶ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

6. Modifizierte Polyisocyanate gemäß Anspruch 5, **dadurch gekennzeichnet, dass** es sich bei den gegenüber Isocyanatgruppen reaktiven Silanverbindungen B) um Umsetzungsprodukte von 3-Aminopropyltrimethoxysilan und/oder 3-Aminopropyltriethoxysilan mit Maleinsäurediethylester handelt.

7. Modifizierte Polyisocyanate gemäß einem der Ansprüche 1 bis 3, **dadurch gekennzeichnet, dass** es sich bei den gegenüber Isocyanatgruppen reaktiven Silanverbindungen B) um Aminosilane, der allgemeinen Formel (IV) 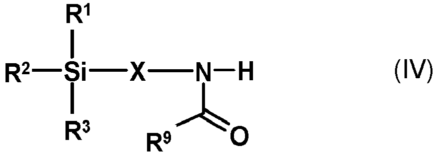 handelt, in welcher R¹, R²und R³ die in Anspruch 3 genannte Bedeutung haben,
X für einen linearen oder verzweigten organischen Rest mit mindestens 2 Kohlenstoffatomen und
R⁹ für einen gesättigten linearen oder verzweigten, aliphatischen oder cycloaliphatischen organischen Rest mit 1 bis 8 Kohlenstoffatomen steht.

8. Modifizierte Polyisocyanate gemäß Anspruch 7, **dadurch gekennzeichnet, dass** es sich bei den gegenüber Isocyanatgruppen reaktiven Silanverbindungen B) um Umsetzungsprodukte von 3-Aminopropyltrimethoxysilan und/oder 3-Aminopropyltriethoxysilan mit Methylformiat und/oder Ethylformiat handelt.

9. Modifizierte Polyisocyanate gemäß einem der Ansprüche 1 bis 3, **dadurch gekennzeichnet, dass** es sich bei den gegenüber Isocyanatgruppen reaktiven Silanverbindungen B) um Mercaptosilane der allgemeinen Formel (VI) 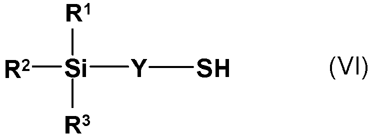 handelt, in welcher R¹, R²und R³ die in Anspruch 3 genannte Bedeutung haben und
Y für einen linearen oder verzweigten organischen Rest mit mindestens 2 Kohlenstoffatomen steht.

10. Modifizierte Polyisocyanate gemäß Anspruch 9, **dadurch gekennzeichnet, dass** es sich bei den gegenüber Isocyanatgruppen reaktiven Silanverbindungen B) um 3-Mercaptopropyltrimethoxysilan und/oder 3-Mercaptopropyltriethoxysilan handelt.

11. Verfahren zur Herstellung der modifizierten Polyisocyanate gemäß Anspruch 1 bis 10, **dadurch gekennzeichnet, dass** wenigstens
A) ein Polyisocyanat auf Basis von 1,5-Diisocyanatopentan mit
B) mindestens einer gegenüber Isocyanatgruppen reaktiven Silanverbindung umgesetzt wird.

12. Verwendung der modifizierten Polyisocyanate gemäß Anspruch 1 bis 10 als Ausgangskomponente bei der Herstellung von Polyurethankunststoffen.

13. Verwendung von Polyisocyanatgemischen enthaltend modifizierte Polyisocyanate gemäß Anspruch 1 bis 10 und Polyisocyanate mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen als Ausgangskomponente bei der Herstellung von Polyurethankunststoffen.

14. Beschichtungsmittel enthaltend modifizierte Polyisocyanate gemäß Anspruch 1 bis 10.

15. Beschichtungsmittel enthaltend Polyisocyanatgemische enthaltend modifizierte Polyisocyanate gemäß Anspruch 1 bis 10 und Polyisocyanate mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen.

16. Mit Beschichtungsmitteln gemäß Anspruch 14 und 15 beschichtete Substrate.

## Claims

1. Modified polyisocyanates obtainable by reacting at least one polyisocyanate A) based on 1,5-diisocyanatopentane with at least one silane compound B) reactive towards isocyanate groups, where the polyisocyanate A) is an oligomeric polyisocyanate consisting of at least two 1,5-diisocyanatopentane molecules and having uretdione, isocyanurate, allophanate, biuret, iminooxadiazinedione and/or oxadiazinetrione structure or any desired mixtures of such polyisocyanates.

2. Modified polyisocyanates according to Claim 1, **characterized in that** the polyisocyanates A) are oligomeric polyisocyanates consisting of at least two 1,5-diisocyanatopentane molecules and having
a) an average isocyanate functionality of 2.0 to 5.0 and
b) an isocyanate group content of 11.0% to 26.0% by weight.

3. Modified polyisocyanates according to Claim 1 or 2, **characterized in that** the silane compounds B) reactive towards isocyanate groups are aminosilanes of the general formula (I) 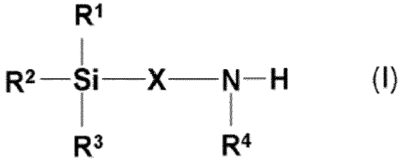 in which
R¹, R² and R³ are identical or different radicals and are each a saturated or unsaturated, linear or branched, aliphatic or cycloaliphatic or an optionally substituted aromatic or araliphatic radical which has up to 18 carbon atoms and may optionally contain up to 3 heteroatoms from the group of oxygen, sulfur and nitrogen,
X is a linear or branched organic radical which has at least 2 carbon atoms and may optionally contain up to 2 imino groups (-NH-),
and
R⁴ is hydrogen, a saturated or unsaturated, linear or branched, aliphatic or cycloaliphatic or an optionally substituted aromatic or araliphatic radical having up to 18 carbon atoms or a radical of the formula 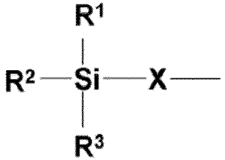 in which R¹, R², R³ and X have the definition given above.

4. Modified polyisocyanates according to Claim 3, **characterized in that** the silane compounds B) reactive towards isocyanate groups are N-methyl-3-aminopropyltrimethoxysilane, N-methyl-3-aminopropyltriethoxysilane, N-(n-butyl)-3-aminopropyltrimethoxysilane, N-(n-butyl)-3-aminopropyltriethoxysilane, bis(3-trimethoxysilylpropyl)amine and/or bis(3-triethoxysilylpropyl)amine.

5. Modified polyisocyanates according to any of the preceding claims, **characterized in that** the silane compounds B) reactive towards isocyanate groups are aminosilanes of the general formula (II) 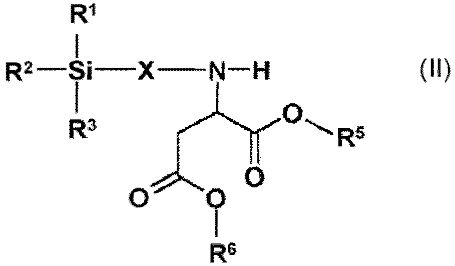 in which R1, R2 and R3 have the definition given in Claim 3,
X is a linear or branched organic radical having at least 2 carbon atoms and
R⁵ and R⁶ are independently saturated or unsaturated, linear or branched, aliphatic or cycloaliphatic or aromatic organic radicals which have 1 to 18 carbon atoms, are substituted or unsubstituted and/or have heteroatoms in the chain.

6. Modified polyisocyanates according to Claim 5, **characterized in that** the silane compounds B) reactive towards isocyanate groups are reaction products of 3-aminopropyltrimethoxysilane and/or 3-aminopropyltriethoxysilane with diethyl maleate.

7. Modified polyisocyanates according to any of Claims 1 to 3, **characterized in that** the silane compounds B) reactive towards isocyanate groups are aminosilanes of the general formula (IV) 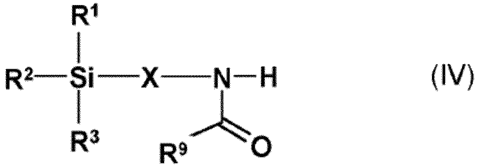 in which R¹, R² and R³ have the definition given in Claim 3,
X is a linear or branched organic radical having at least 2 carbon atoms and
R⁹ is a saturated linear or branched, aliphatic or cycloaliphatic organic radical having 1 to 8 carbon atoms.

8. Modified polyisocyanates according to Claim 7, **characterized in that** the silane compounds B) reactive towards isocyanate groups are reaction products of 3-aminopropyltrimethoxysilane and/or 3-aminopropyltriethoxysilane with methyl formate and/or ethyl formate.

9. Modified polyisocyanates according to any of Claims 1 to 3, **characterized in that** the silane compounds B) reactive towards isocyanate groups are mercaptosilanes of the general formula (VI) 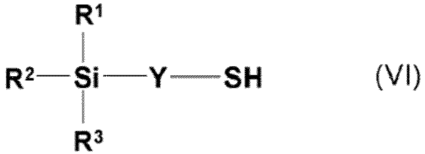 in which R¹, R² and R³ have the definition given in Claim 3 and
Y is a linear or branched organic radical having at least 2 carbon atoms.

10. Modified polyisocyanates according to Claim 9, **characterized in that** the silane compounds B) reactive towards isocyanate groups are 3-mercaptopropyltrimethoxysilane and/or 3-mercaptopropyltriethoxysilane.

11. Process for preparing the modified polyisocyanates according to Claim 1 to 10, **characterized in that** at least
A) one polyisocyanate based on 1,5-diisocyanatopentane is reacted with
B) at least one silane compound reactive towards isocyanate groups.

12. Use of the modified polyisocyanates according to Claim 1 to 10 as a starting component in the production of polyurethane plastics.

13. Use of polyisocyanate mixtures comprising modified polyisocyanates according to Claim 1 to 10 and polyisocyanates which have uretdione, isocyanurate, iminooxadiazinedione, urethane, allophanate, biuret and/or oxadiazinetrione structure and bear aliphatically, cycloaliphatically, araliphatically and/or aromatically bonded isocyanate groups as starting component in the production of polyurethane plastics.

14. Coating composition comprising modified polyisocyanates according to Claim 1 to 10.

15. Coating composition comprising polyisocyanate mixtures comprising modified polyisocyanates according to Claim 1 to 10 and polyisocyanates which have uretdione, isocyanurate, iminooxadiazinedione, urethane, allophanate, biuret and/or oxadiazinetrione structure and bear aliphatically, cycloaliphatically, araliphatically and/or aromatically bonded isocyanate groups.

16. Substrates coated with coating compositions according to Claim 14 and 15.

## Revendications

1. Polyisocyanates modifiés, pouvant être obtenus par réaction d'au moins un polyisocyanate A) à base de 1,5-diisocyanatopentane avec au moins un composé silane B) réactif vis-à-vis des groupes isocyanate, le polyisocyanate A) étant un polyisocyanate oligomère, constitué d'au moins deux molécules de 1,5-diisocyanatopentane, ayant une structure d'uretdione, d'isocyanurate, d'allophanate, de biuret, d'iminooxadiazinedione et/ou d'oxadiazinetrione ou des mélanges quelconques de ces polyisocyanates.

2. Polyisocyanates modifiés selon la revendication 1, **caractérisés en ce que** les polyisocyanates sont des polyisocyanates oligomères, constitués d'au moins deux molécules de 1,5-diisocyanatopentane, ayant
a) une fonctionnalité isocyanate moyenne de 2,0 à 5,0 et
b) une teneur en groupes isocyanate de 11,0 à 26,0 % en poids.

3. Polyisocyanates modifiés selon la revendication 1 ou 2, **caractérisés en ce que** les composés silanes B) réactifs vis-à-vis des groupes isocyanate sont des aminosilanes de formule générale (I) 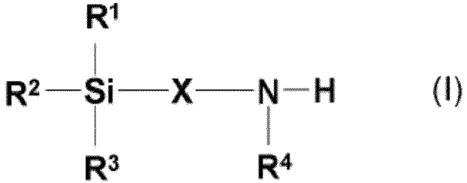 dans laquelle
R¹, R² et R³ représentent des radicaux identiques ou différents, et chacun un radical aliphatique ou cycloaliphatique, saturé ou insaturé, linéaire ou ramifié, ou aromatique ou araliphatique éventuellement substitué, ayant jusqu'à 18 atomes de carbone, qui peut éventuellement contenir jusqu'à 3 hétéroatomes de la série oxygène, soufre, azote,
X représente un radical organique linéaire ou ramifié ayant au moins 2 atomes de carbone, qui peut éventuellement contenir jusqu'à 2 groupes imino (-NH-),
et
R⁴ représente un hydrogène, un radical aliphatique ou cycloaliphatique saturé ou insaturé, linéaire ou ramifié, ou aromatique ou araliphatique éventuellement substitué, ayant jusqu'à 18 atomes de carbone, ou un radical de formule 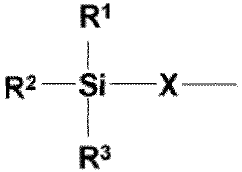 dans laquelle R¹, R², R³ et X ont les significations données ci-dessus.

4. Polyisocyanates modifiés selon la revendication 3, **caractérisés en ce que** les composés silanes B) réactifs vis-à-vis des groupes isocyanate sont le N-méthyl-3-aminopropyltriméthoxysilane, le N-méthyl-3-aminopropyltriéthoxysilane, le N-(n-butyl)-3-aminopropyltriméthoxysilane, le N-(n-butyl)-3-aminopropyltriéthoxysilane, la bis(3-triméthoxysilylpropyl)-amine et/ou la bis(3-triéthoxysilylpropyl) amine.

5. Polyisocyanates modifiés selon l'une des revendications précédentes, **caractérisés en ce que** les composés silanes B) réactifs vis-à-vis des groupes isocyanate sont des aminosilanes de formule générale (II) 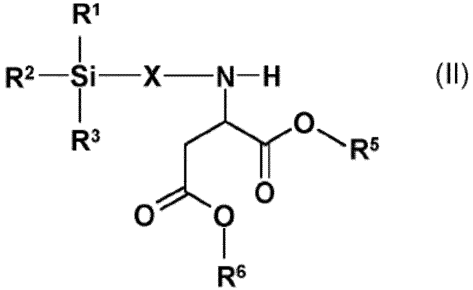 dans laquelle R¹, R² et R³ ont les significations données dans la revendication 3,
X représente un radical organique linéaire ou ramifié ayant au moins 2 atomes de carbone et
R⁵ et R⁶ représentent indépendamment l'un de l'autre des radicaux organiques aliphatiques ou cycloaliphatiques ou aromatiques saturés ou insaturés, linéaires ou ramifiés, ayant 1 à 18 atomes de carbone, qui sont substitués ou non substitués et/ou comportent des hétéroatomes dans la chaîne.

6. Polyisocyanates modifiés selon la revendication 5, **caractérisés en ce que** les composés silanes B) réactifs vis-à-vis des groupes isocyanate sont des produits de la réaction de 3-aminopropyltriméthoxysilane et/ou de 3-aminopropyltriéthoxysilane avec l'ester diéthylique de l'acide maléique.

7. Polyisocyanates modifiés selon l'une des revendications 1 à 3, **caractérisés en ce que** les composés silanes B) réactifs vis-à-vis des groupes isocyanate sont des aminosilanes de formule générale (IV) 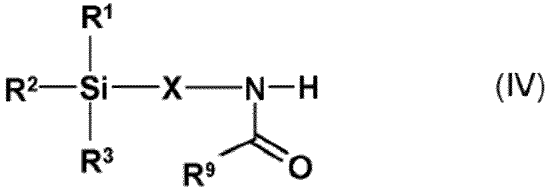 dans laquelle R¹, R² et R³ ont les significations données dans la revendication 3,
X représente un radical organique linéaire ou ramifié ayant au moins 2 atomes de carbone et
R⁹ représente un radical organique aliphatique ou cycloaliphatique saturé, linéaire ou ramifié, ayant 1 à 8 atomes de carbone.

8. Polyisocyanates modifiés selon la revendication 7, **caractérisés en ce que** les composés silanes B) réactifs vis-à-vis des groupes isocyanate sont des produits de la réaction de 3-aminopropyltriméthoxysilane et/ou de 3-aminopropyltriéthoxysilane avec du formiate de méthyle et/ou du formiate d'éthyle.

9. Polyisocyanates modifiés selon l'une des revendications 1 à 3, **caractérisés en ce que** les composés silanes B) réactifs vis-à-vis des groupes isocyanate sont des mercaptosilanes de formule générale (VI) 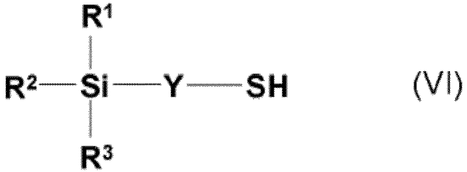 dans laquelle R¹, R² et R³ ont les significations données dans la revendication 3 et
Y représente un radical organique linéaire ou ramifié ayant au moins 2 atomes de carbone.

10. Polyisocyanates modifiés selon la revendication 9, **caractérisés en ce que** les composés silanes B) réactifs vis-à-vis des groupes isocyanate sont le 3-mercaptopropyltriméthoxysilane et/ou le 3-mercaptopropyltriéthoxysilane.

11. Procédé de fabrication des polyisocyanates modifiés selon les revendications 1 à 10, **caractérisé en ce qu'**on fait réagir
A) un polyisocyanate à base de 1,5-diisocyanatopentane avec
B) au moins un composé silane réactif vis-à-vis des groupes isocyanate.

12. Utilisation des polyisocyanates modifiés selon les revendications 1 à 10 en tant que composant de départ lors de la fabrication de plastiques de polyuréthane.

13. Utilisation de mélanges de polyisocyanates contenant des polyisocyanates modifiés selon les revendications 1 à 10 et des polyisocyanates ayant une structure d'uretdione, d'isocyanurate, d'iminooxadiazinedione, d'uréthane, d'allophanate, de biuret et/ou d'oxadiazinetrione, qui portent des groupes isocyanates à liaison aliphatique, cycloaliphatique, araliphatique et/ou aromatique, en tant que composant de départ lors de la fabrication de plastiques de polyuréthane.

14. Composition de revêtement contenant des polyisocyanates modifiés selon les revendications 1 à 10.

15. Composition de revêtement contenant des mélanges de polyisocyanates contenant des polyisocyanates modifiés selon les revendications 1 à 10 et des polyisocyanates ayant une structure d'uretdione, d'isocyanurate, d'iminooxadiazinedione, d'uréthane, d'allophanate, de biuret et/ou d'oxadiazinetrione, qui portent des groupes isocyanates à liaison aliphatique, cycloaliphatique, araliphatique et/ou aromatique.

16. Substrats revêtus de compositions de revêtement selon les revendications 14 et 15.
